**Europäisches Patentamt**

**European Patent Office**

**Office européen des brevets**

(19)

(11) Veröffentlichungsnummer: **0 155 906**
**B1**

(12) ## EUROPÄISCHE PATENTSCHRIFT

(45) Veröffentlichungstag der Patentschrift:
**27.01.88**

(51) Int. Cl.⁴: **C 22 B 21/00, C 22 B 21/06**

(21) Anmeldenummer: **85810062.1**

(22) Anmeldetag: **18.02.85**

(54) **Verfahren zur Aufarbeitung von Aluminiumschrott.**

(30) Priorität: **29.02.84 CH 1115/84**

(43) Veröffentlichungstag der Anmeldung:
**25.09.85 Patentblatt 85/39**

(45) Bekanntmachung des Hinweises auf die Patenterteilung:
**27.01.88 Patentblatt 88/4**

(84) Benannte Vertragsstaaten:
**CH DE LI**

(56) Entgegenhaltungen:
**DE - C - 937 559**
**FR - A - 1 324 712**
**FR - A - 2 291 281**
**SU - A - 187 304**
**US - A - 1 513 875**
**US - A - 3 962 081**

(73) Patentinhaber: **SCHWEIZERISCHE ALUMINIUM AG,
CH-3965 Chippis (CH)**

(72) Erfinder: **Viré, Sylvestre, Rabenflustrasse 9,
CH-8212 Neuhausen am Rheinfall (CH)**

## Beschreibung

Die Erfindung bezieht sich auf ein Verfahren zur Aufarbeitung von stark verunreinigtem Aluminiumschrott unter Verwendung einer Salzschmelze aus Alkali- und/oder Erdalkalichloriden und Fluoriden.

Beim Aufarbeiten von stark verunreinigtem Aluminiumschrott, insbesondere wenn der Aluminiumgehalt unter 50 Gew.-% liegt, sind Glasteilchen, Steine und oxidische Partikel ganz allgemein sehr schädlich. Deren Entfernung hat in bisher üblichen Technologien erhebliche Schwierigkeiten bereitet. Vor der elektrolytischen Reinigung, sei es beispielsweise durch Dreischichtenelektrolyse, bipolare Elektrolyse oder fraktionierte Kristallisation, müssen jedoch die verunreinigenden Festkörperteile abgetrennt werden.

Die heute von der Aluminiumaufarbeitungsindustrie in üblichen Verfahren eingesetzten Salze werden wegen des hohen Gehaltes von Oxiden zu einem untragbaren Prozentsatz verbraucht.

Der Erfinder hat sich deshalb die Aufgabe gestellt, ein Verfahren zur Aufarbeitung von stark verunreinigtem Aluminiumschrott, unter Verwendung einer Salzschmelze aus Alkali- und/oder Erdalkalichloriden und Fluoriden, zu schaffen, das wirtschaftlich und mit hohem Wirkungsgrad arbeitet.

Die Aufgabe wird erfindungsgemäss dadurch gelöst, dass

- der auf 400-500°C vorgewärmte Aluminiumschrott in die auf 50-100°C über ihren Schmelzpunkt erwärmte Salzschmelze, die bei Arbeitstemperatur eine kleinere Dichte als Aluminium hat, gegeben und die geschmolzene Mischung mindestens 1 Std. in einem Schmelz- bzw. Abstehofen auf dieser Temperatur gehalten wird,

- dann vorerst das während des Abstehens sedimentierte flüssige Aluminium und anschliessend die Salzschmelze mit einem gegen die Filtrate resistenten, offenporigen Keramikfilter von den festen Verunreinigungen getrennt wird, und

- schliesslich die filtrierte Aluminiumschmelze einer elektrolytischen Raffinationszelle und die Salzschmelze der Wiederverwendung im Schmelz- bzw. Abstehofen zugeführt wird.

Der Einsatz des Keramikfilters ermöglicht, nach dem Auflösen des Aluminiumschrottes in einer Salzschmelze und dem Sedimentieren des flüssien Aluminiums in einem Abstehofen, die Trennung des flüssigen Aluminiums mit metallischen Verunreinigungen von Festkörperpartikeln, vorwiegend keramischen Teilchen, die zusammen mit dem Altmetall anfallen. So weist z.B. aus Autofriedhöfen stammender Aluminiumschrott üblicherweise Verunreinigungsgrade von über 50 Gew.-% auf.

In der abschliessenden elektrolytischen Reinigungsstufe werden die metallischen Verunreinigungen, wie beispielsweise Eisen, Silizium und Kupfer, selektiv vom Schrott abgetrennt. Die elektrolytische Reinigung erfolgt bevorzugt nach der in der Aluminiumindustrie seit langer Zeit wohlbekannten Dreischichtenelektrolyse oder in einer aus der EP-OS 84 810 343.8 bekannten bipolaren Elektrolysezelle. Eine bipolare Zelle wird vor allem eingesetzt, wenn der Aluminiumschrott hohe Silizium- und/oder Eisengehalte hat, weil dann bei der Dreischichtenelektrolyse auftretende hohe Kupferverluste vermieden werden können.

Die zur Durchführung des erfindungsgemässen Verfahrens notwendige Salzmenge wird so berechnet, dass sie vorzugsweise 1,2-2mal, insbesondere 1,5mal, so gross ist wie das Gewicht der zu reinigenden Schrottmenge. Die eingesetzten Salzchargen, bestehen zweckmässig aus 30-50 Gew.-% NaCl, 30-50 Gew.-% KCl und 15-25 Gew.-% Kryolith. Als besonders vorteilhaft hat sich eine Salzschmelze aus etwa 40 Gew.-% NaCl, 40 Gew.-% KCl und 20 Gew.-% Kryolith erwiesen, die vor der Zugabe des vorgewärmten Aluminiumschrottes auf einer Temperatur von etwa 750°C gehalten wird. Insbesondere bei kleinstückigem Schrott kann es vorteilhaft sein, wenn die aus den Salzen und dem Aluminiumschrott gebildete Schmelzemischung vor dem Abstehen gerührt wird. Dabei wird in erster Linie die Konzentration von Magnesium im Aluminiumschrott stark gesenkt. Das Rühren erfolgt mit bekannten mechanischen Mitteln, wie beispielsweise einem Magnetrührer, oder durch Einleitung von inerten Gasen.

Die reinigende Wirkung der Salzschmelze kann dadurch verstärkt werden, dass vor dem Abstehen ein aus der Schmelzetechnologie bekanntes Reinigungsgas, wie beispielsweise Chlor, eingesetzt wird.

Während des Abstehens, bevorzugt während 1-2 Stunden, sedimentieren Aluminiumtröpfchen und sammeln sich auf dem Boden des Abstehgefässes, als welches zweckmässig gleich der Schmelzofen eingesetzt wird.

Nach der Abstehzeit sind das flüssige Aluminium und das verschmutzte Salz in zwei Phasen getrennt, wobei das schwerere Aluminium unten liegt, und zum Filtrieren bereit.

Die beheizbare Filterkammer enthält das Keramikfilter, welches beispielsweise nach einer Ausführungsform der DE-OS 2 613 023 ausgebildet ist und zweckmässig in Form einer Platte vorliegt. Die relativ grossporige Filterplatte, insbesondere aus MgO, $Al_2O_3$, $MgO-Al_2O_3$ oder $ZrO_2$, hat bevorzugt eine Porendichte von 8-20, insbesondere etwa 16 Poren pro cm.

Durch dieses auswechselbare Keramikfilter kann das flüssige Aluminium ungehindert durchtreten, während alle festen Partikel zurückgehalten werden. Das von den festen Verunreinigungen befreite Aluminium wird kontinuierlich oder chargenweise aus der Filterkammer zu einem Warmhalteofen oder direkt in die Zelle zur elektrolytischen Raffination geleitet.

Nach dem vollständigen Durchfluss des Aluminiums wird das geschmolzene Salz mit den Festkörperpartikeln in Suspension durch das Filter geleitet. Während das zu filtrierende flüssige Aluminium nur wenige Festkörperpartikel enthält, wird der Hauptteil der festen Verunreinigungen durch das Salz zum Keramikfilter gebracht. Dort bilden die Partikel einen Kuchen, der nach dem Durchfluss der Charge entweder separart oder mit dem Keramikfilter entfernt werden kann.

Das von den Festkörperpartikeln befreite geschmolzene Salz wird wieder in den Schmelzofen zurückgeführt, wo es die nächste Charge von Aluminiumschrott aufnehmen kann.

Die Erfindung wird anhand der aus einer Figur bestehenden Zeichnung näher erläutert. Der schematische Vertikalschnitt zeigt einen Schmelzofen, der gleichzeitig als Abstehofen dient und eine damit verbundene, beheizbare Filterkammer.

Die Vorrichtung zur Aufarbeitung von stark verunreinigtem Aluminiumschrott besteht im wesentlichen aus einem Schmelzofen 10, der gleichzeitig als Abstehofen dient, und einer beheizbaren Filterkammer 12, wobei die beiden Gefässe durch einen Verbindungskanal 14 mit einem Schöpfventil 16 miteinander verbunden sind. Die ganze Vorrichtung, abgesehen vom abhebbaren, isolierenden Deckel 18, ist von refraktärem Mauerwerk 20 umgeben, das mit Magnesitsteinen 22 ausgekleidet ist.

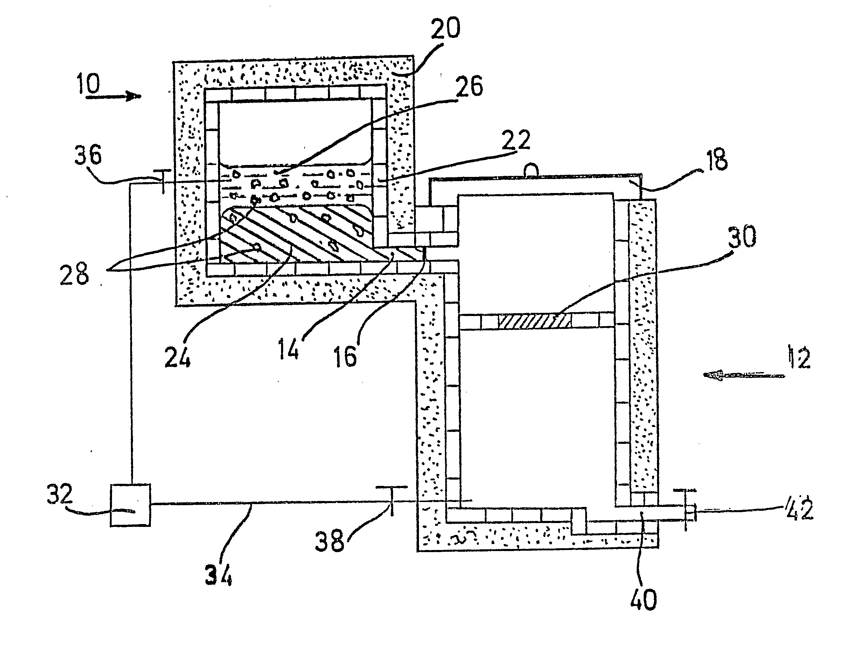

Durch eine einfachheitshalber nicht dargestellte Chargieröffnung wird der vorgewärmte Aluminiumschrott 24 in die Salzschmelze 26 eingefüllt. In der Zeichnung werden die nach dem Abstehen bereits getrennten Phasen dargestellt, wobei die oben liegende, leichtere Salzschmelze 26 den Hauptteil der festen Verunreinigungen 28 enthält. In der unen liegenden flüssigen Aluminiumphase sind nur wenig feste Verunreinigungen 28 enthalten.

Das unterhalb des Verbindungskanals 14 in der Filterkammer 12 angeordnet Keramikfilter 30 ist plattenförmig ausgebildet.

Bei chargenweiser Entleerung des von den festen Verunreinigungen befreiten flüssigen Aluminiums ist das unterhalb des Keramikfilters befindliche Volumen mindestens so gross, dass es den gesamten Metallanteil einer Aluminiumschrottcharge fassen kann.

Das von den festen Verunreinigungen 28 befreite Aluminium wird durch einen Abflusskanal 40, der mit dem Schöpfventil 42 verschliessbar ist, aus der Filterkammer 12 entfernt.

Die von den festen Verunreinigungen 28 befreite Salzschmelze wird mittels einer Pumpe 32 über eine Rohrleitung 34, die mit zwei Schliessvorrichtungen 36, 38 versehen ist, in den Schmelzofen 10 zurückgeführt.

Die konventionellen Mittel zum Beheizen des Schmelzofens und der Filterkammer sind einfachheitshalber nicht dargestellt, ebenso die wahlweise vorgesehenen Mittel zum mechanischen Rühren oder zur Zufuhr von inerten oder chemisch aktiven Gasen.

Weiter ist die Filterkammer mit einem nicht gezeigten Abfluss für die Salzschmelze versehen, wenn diese so stark verunreinigt ist, dass sie nicht mehr in den Schmelzofen 10 zurückgeführt, sondern ersetzt wird.

**Patentansprüche**

1. Verfahren zur Aufarbeitung von stark verunreinigtem Aluminiumschrott, unter Verwendung einer Salzschmelze aus Alkali- und/oder Erdalkalichloriden und Fluoriden, dadurch gekennzeichnet, dass

– der auf 400-500°C vorgewärmte Aluminiumschrott (24) in die auf 50-100°C über ihren Schmelzpunkt erwärmte Salzschmelze (26), die bei Arbeitstemperatur eine kleinere Dichte als Aluminium hat, gegeben und die geschmolzene Mischung mindestens 1 Std. in einem Schmelz- bzw. Abstehofen (10) auf dieser Temperatur gehalten wird.

– dann vorerst das während des Abstehens sedimentierte flüssige Aluminium und anschliessend die Salzschmelze (26) mit einem gegen die Filtrate resistenten, offenporigen Keramikfilter (30) von den festen Verunreinigungen (28) getrennt wird, und

– schliesslich die filtrierte Aluminiumschmelze einer elektrolytischen Raffinationszelle und die Salzschmelze der Wiederverwendung im Schmelz- bzw. Abstehofen (10) zugeführt wird.

2. Verfahren nach Anspruch 1, dadurch gekennzeichnet, dass die Salzschmelze (26) und der Aluminiumschrott (24) in einem Gewichtsverhältnis von 1,2-2 : 1, vorzugsweise 1,5 : 1, eingesetzt wird.

3. Verfahren nach Anspruch 1 oder 2, dadurch gekennzeichnet, dass eine aus 30-50 Gew.-% NaCl, 30-50 Gew.-% KCl und 15-25 Gew.-% Kryolith bestehende Salzschmelze (26) eingesetzt wird.

4. Verfahren nach Anspruch 3, dadurch gekennzeichnet, dass eine aus etwa 40 Gew.-% NaCl, 40 Gew.-% KCl und 20 Gew.-% Kryolith bestehende Salzschmelze (26) vor der Zugabe des vorgewärmten Aluminiumschrottes (24) und während des Abstehens auf einer Temperatur von etwa 750°c gehalten wird.

5. Verfahren nach mindestens einem der Ansprüche 1 bis 4, dadurch gekennzeichnet, dass die geschmolzene Mischung aus Salzen und Aluminiumschrott vor dem Abstehen mechanisch oder durch Einleiten von inerten Gasen gerührt wird.

6. Verfahren nach mindestens einem der Ansprüche 1 bis 5, dadurch gekennzeichnet, dass vor dem Abstehen wenigstens ein reinigendes Gas, vorzugsweise Chlor, in die geschmolzene Mischung aus Salzen und Aluminiumschrott eingeleitet wird.

7. Verfahren nach mindestens einem der Ansprüche 1 bis 6, dadurch gekennzeichnet, dass die Sedimentation des flüssigen Aluminiums während einer Abstehzeit von 1-2 Std. erfolgt.

8. Verfahren nach mindestens einem der Ansprüche 1 bis 7, dadurch gekennzeichnet, dass die festen Verunreinigungen (28) mit einem Keramikfilter (30) aus MgO, $Al_2O_3$, $MgO-Al_2O_3$ oder $ZrO_2$ abgetrennt werden.

9. Verfahren nach mindestens einem der Ansprüche 1 bis 8, dadurch gekennzeichnet, dass ein Keramikfilter (30) mit einer Porendichte von 8-20, vorzugsweise etwa 16 Poren pro cm eingesetzt wird.

**Claims**

1. Process for reprocessing heavily contaminated scrap aluminium, using a salt melt of alkali metal and/or alkaline earth metal chlorides and fluorides, characterized in that

– the aluminium scrap (24) preheated to 400-500°C is added to the salt melt (26) which has been heated to a temperature 50-100°C above its melting point and which, at the working temperature, has a density lower than that of aluminium, and the molten mixture is held at this temperature for at least 1 hour in a melting or dead-melt furnace (10),

– subsequently, first the molten aluminium which has sedimented during the dead-melting and then the salt melt (26) are separated from the solid impurities (28) by means of an open-pored ceramic filter (30) which is resistant to the filtrates, and

– finally, the filtered aluminium melt is fed to an electrolytic refining cell and the salt melt is fed to reuse in the melting or dead-melt furnace (10).

2. Process according to claim 1, characterized in that the salt melt (26) and the aluminium scrap (24) are employed in a weight ratio of 1.2-2 : 1, preferably 1.5 : 1.

3. Process according to claim 1 or 2, characterized in that a salt melt (26) consisting of 30-50% by weight of NaCl, 30-50% by weight of KCl and 15-25% by weight of cryolite is used.

4. Process according to claim 3, characterized in that a salt melt (26) consisting of about 40% by weight of NaCl, 40% by weight of KCl and 20% by weight of cryolite is held at a temperature of about 750°C before the addition of the preheated aluminium scrap (24) and during the dead-melting.

5. Process according to at least one of claims 1 to 4, characterized in that the molten mixture of salts and aluminium scrap is, before dead-melting, stirred mechanically or by introducing inert gases.

6. Process according to at least one of claims 1 to 5, characterized in that, before dead-melting, at least one purifying gas, preferably chlorine, is passed into the molten mixture of salts and aluminium scrap.

7. Process according to at least one of claims 1 to 6, characterized in that the sedimentation of the molten aluminium takes place during a dead-melting time of 1-2 hours.

8. Process according to at least one of claims 1 to 7, characterized in that the solid impurities (28) are separated off by means of a ceramic filter (30) of MgO, $Al_2O_3$, $MgO-Al_2O_3$ or $ZrO_2$.

9. Process according to at least one of claims 1 to 8, characterized in that a ceramic filter (30) of a pore density of 8-20, preferably about 16 pores per cm is used.


**Revendications**

1. Procédé pour le traitement de récupération d'aluminium à partir de déchets d'aluminium très impurs, avec utilisation d'un bain de sel composé de chlorures alcalins et/ou alcalino-terreux et de fluorures, caractérisé en ce qu'il consiste

– à préchauffer les déchets d'aluminium (24) à 400-500°C avant de les introduire dans un bain de sel (26) chauffé à 50-100°C au-dessus de leur point de fusion et ayant une plus faible masse volumique que l'aluminium à la température de travail, et à maintenir le mélange fondu pendant 1 h au moins à cette température dans un four de fusion ou d'attente (10),

– puis à séparer des impuretés solides (28), d'abord l'aluminium liquide qui s'est déposé au fond pendant l'attente et ensuite le bain de sel (26), au moyen d'un filtre céramique (30) à pores ouverts et qui résiste aux filtrats et,

– enfin, à amener l'aluminium liquide filtré à une cellule d'affinage électrolytique et à réintroduire le bain de sel dans le four de fusion ou d'attente (10) en vue de sa réutilisation.

2. Procédé selon la revendication 1, caractérisé par l'utilisation d'un bain de sel (26) et des déchets d'aluminium (24) suivant un rapport pondéral de 1,2-2 : 1, de préférence de 1,5 : 1.

3. Procédé selon la revendication 1 ou 2, caractérisé par l'utilisation d'un bain de sel (26) constitué de 30-50% en poids de NaCl, 30-50% en poids de KCl et 15-25% en poids de cryolithe.

4. Procédé selon la revendication 3, caractérisé par l'utilisation d'un bain de sel (26) constitué d'environ 40% en poids de NaCl, 40% en poids de KCl et 20% en poids de cryolithe, et par le maintien de ce bain à une température d'environ 750°C avant l'addition des déchets d'aluminium (24) préchauffés et pendant l'attente.

5. Procédé selon au moins une des revendications 1 à 4, caractérisé par le brassage du mélange fondu de sels et de déchets d'aluminium, avant l'attente, par voie mécanique ou par introduction de gaz inertes.

6. Procédé selon au moins une des revendications 1 à 5, caractérisé par l'introduction d'au moins un gaz épurateur, de chlore de préférence, dans le mélange fondu de sels et de déchets d'aluminium, avant l'attente.

7. Procédé selon au moins une des revendications 1 à 6, caractérisé en ce que le dépôt de l'aluminium liquide s'effectue pendant une durée d'attente de 1-2 h.

8. Procédé selon au moins une des revendications 1 à 7, caractérisé en ce que l'on sépare les impuretés solides (28) au moyen d'un filtre céramique (30) formé de MgO, $Al_2O_3$, $MgO-Al_2O_3$ ou $ZrO_2$.

9. Procédé selon au moins une des revendications 1 à 8, caractérisé en ce que l'on utilise un filtre céramique (30) avec une densité de pores de 8-20, de préférence d'environ 16 pores par cm.

0 155 906